# EUROPÄISCHE PATENTSCHRIFT

(11) **EP 2 795 154 B1**
(45) Veröffentlichungstag und Bekanntmachung des Hinweises auf die Patenterteilung: **20.07.2016**
(21) Anmeldenummer: 12810089.8
(22) Anmeldetag: 17.12.2012
(51) Int. Cl.: F16G 1/08, F16G 1/10, F16G 1/28, F16G 5/06, F16G 5/10, F16G 5/20

(54) **RIEMEN MIT TEXTILAUFLAGE**
BELT HAVING A TEXTILE OVERLAY
COURROIE À SUPPORT TEXTILE

(30) Priorität: 20.12.2011 DE 102011121643
(43) Veröffentlichungstag der Anmeldung: 29.10.2014
(60) Teilanmeldung: 16174379.4
(73) Patentinhaber: Arntz Beteiligungs GmbH & Co. KG, 37671 Höxter (DE)
(72) Erfinder: GIBSON, Daniel, Pattie, 37671 Höxter (DE)
(74) Vertreter: Lins, Edgar
(86) Internationale Anmeldenummer: PCT/EP2012/005192
(87) Internationale Veröffentlichungsnummer: WO 2013/091809

(56) Entgegenhaltungen:
- EP-A2- 1 180 615
- DE-A1- 2 442 335
- DE-A1-102009 026 077
- DE-A1-102010 017 782

## Beschreibung

Die Erfindung betrifft einen Kraftübertragungsriemen mit einem Unterbau und einer Kraftübertragungszone aus Polyurethan sowie einer Textilauflage in Kontakt zum Polyurethan der Kraftübertragungszone, wobei sich im Inneren der Textilauflage zusätzlich zum Textilmaterial ein thermoplastisches Material befindet.

Textilbeschichtungen auf Riemen, insbesondere Zahnriemen, haben in erster Linie den Sinn, den Abrieb zu vermindern und bei Zahnriemen die Einreißneigung an den Zahnkanten und die Weiterreißneigung bei Schäden in der Zahnaußenkante zu unterdrücken.

Polyurethanriemen werden im Allgemeinen direkt auf die Textilauflage gegossen, so dass das Polyurethan auf der Auflage ausreagiert, vernetzt und fest wird. Dabei dringt es wenigstens teilweise in das Textil ein und durch dieses hindurch. Wenn nun im Laufe des Gebrauchs die abriebfeste und gegebenenfalls reibungsvermindernde Textilauflage etwas abgetragen wird, kommt das Riemenpolyurethan, das in der Regel einen sehr hohen Reibungskoeffizienten besitzt, direkt mit der Kraftübertragungs- bzw. Zahnscheibe in Kontakt, so dass sich die Reibung dort schlagartig erhöht. Dies ist unerwünscht.

Aus der DE 10 2008 055 497 A1 ist es bekannt, bei einem Antriebsriemen einen Haftvermittler zwischen Grundkörper und Textilauflage anzuordnen, um ein zu weites Eindringen des Vulkanisats in die Textilauflage zu vermeiden und eine bessere chemische Anbindung an das Textil zu bewirken. Der Haftvermittler schmilzt bei der Vulkanisation und dringt unter Mitvernetzung in die Textilauflage ein. Für Polyurethanriemen ist das Verfahren nicht geeignet, da es die an sich gewünschte mechanische Verzahnung zwischen Polyurethan und Textil verhindert und die Haltbarkeit bzw. maximale Laufzeit des Riemens verkürzt.

Weiterhin ist es aus der US 6,296,588 B1 bekannt, bei einem Endlosriemen die Textilauflage mit einer zusätzlichen Schicht aus einem hochschmelzenden Thermoplasten zu versehen. Hierdurch wird ein zusätzlicher Abriebschutz gewährleistet, der jedoch nur solange anhält, bis der Thermoplast auf der Oberfläche durch Abnutzung abgetragen ist. Danach kommt es zu einem sehr plötzlichen Reibungsanstieg, sobald Polyurethan, das beim Gießen des Riemens das Textil bis zur Thermoplastschicht durchdrungen hat, an die Oberfläche gelangt.

Um die Reibungserhöhung auszugleichen wurde daher auch schon vorgeschlagen, die Textilauflage zusätzlich gleitend auszurüsten. Dies geschieht vielfach mit PTFE, was jedoch zum Brechen neigt und durch Scheuern der Fasern aneinander während des Gebrauchs zu schnell verloren geht. Derartige Textilien mit zusätzlicher Gleitausrüstung durch PTFE sind beispielsweise aus der WO 03/031700 A1 und der US 2010/0120566 A1 bekannt. Dabei schlägt die US 2010/0120566 A1 vor, in das Gewebe, das PTFE-Fasern enthält, niedrig schmelzende Thermoplastfasern mit einzubinden, die bei Temperaturbelastung aufschmelzen und die PTFE-Fasern fixieren. Da diese Fixierung die PTFE-Fasern umgibt, behindert sie jedoch gleichzeitig die Gleitverbesserung.

Durch DE 10 2010 017 782 A1 sind Kraftübertragungsriemen bekannt, die aus Elastomeren mit einer Kautschukkomponente bestehen. Prinzipiell kommen als Werkstoffe für derartige Riemen auch thermoplastische Polyurethane infrage. Der insbesondere als Zahnriemen ausgebildete Kraftübertragungsriemen weist in der Kraftübertragungszone eine Textilauflage auf. Diese kann zusätzlich mit einem fluorhaltigen Kunststoff, insbesondere Polytetrafluorethylen, getränkt sein, und zwar bei einem hohen Füllungsgrad dieses Kunststoffes, wobei gleichzeitig eine Polymerbeschichtung (Versiegelung) als zusätzliche Schutzschicht gebildet wird. Die Textilauflage und die zusätzliche Schutzschicht treten dabei als gemeinsame Schutzschicht auf. Die Schutzschicht kann beispielsweise aus Polyurethan, aus einem fluorhaltigen Kunststoff, insbesondere Polytetrafluorethylen, Polyvinylfluorid oder Polyvinylidenfluorid oder aus einem Gemisch der genannten bestehen. Mit der Schutzschicht wird die Auflage gelöst, den Kraftübertragungsriemen auch für solche Anwendungen geeignet zu machen, bei denen die Kraftübertragungszone einer Öleinwirkung ausgesetzt wird, beispielsweise in Öl eingetaucht wird. Diese Funktion ist in WO 2005/080821 A1 beschrieben, auf die diesbezüglich ausdrücklich verwiesen wird. Die WO 2005/080821 A1 offenbart ferner, dass die Textilauflage mit einem Kleber getränkt ist, um die Verbindung zu dem Elastomer zu verbessern. Ein Eindringen des Elastomers in die Textilauflage ist daher nicht vorgesehen.

Eine reibungsreduzierende Textilauflagen-Ausrüstung wird als optionale Maßnahme auch in der DE 10 2009 026 077 A1 beschrieben.

Die DE 24 42 335 A1 offenbart einen Zahnriemen mit einem Riemenkörper aus einem elastomeren Material, insbesondere aus Polyurethan, und mit einer Textilauflage entlang der Zahnkontur. Um das abriebfeste Gewebe der Textilauflage an der Außenseite im Wesentlichen frei von Riemenelastomer zu halten, ist die außenliegende Seite der abriebfesten Gewebeschicht mit einem elastomerundurchlässigen Material beschichtet, beispielsweise einem Polyethylen, das vorzugsweise in Form einer Folie aufgebracht wird und den Durchtritt von Polyurethan wirksam verhindert.

Der Erfindung liegt die Aufgabe zugrunde, einen Riemen der eingangs genannten Art so weiterzubilden, dass eine deutliche Laufzeitverbesserung bei über die Laufzeit weitgehend gleichbleibenden Gebrauchseigenschaften erzielt wird. Insbesondere soll die Abriebsfestigkeit des Riementextils gesteigert und eine Erhöhung des Reibungskoeffizienten über die Laufzeit vermieden oder vermindert werden.

Diese Aufgabe wird gelöst mit dem Riemen gemäß Anspruch 1, dem zugehörigen Herstellungsverfahren nach Anspruch 6 und einem erfindungsgemäß ausgerüsteten Riementextil nach Anspruch 12 . Weitere vorteilhafte Ausgestaltungen der Erfindung sind in den zugehörigen Unteransprüchen angegeben.

Bei dem erfindungsgemäßen Riemen kann es sich grundsätzlich um jeden Kraftübertragungsriemen handeln, der einen Unterbau aus Polyurethan und eine daran ausgebildete Kraftübertragungszone besitzt. Die Kraftübertragungszone aus Polyurethan ist mit einer Textilauflage abgedeckt, so dass diese Textilauflage und das Polyurethan des Riemenkörpers oder zumindest der Kraftübertragungszone in unmittelbarem Kontakt stehen.

Derartige Riemen werden im Allgemeinen hergestellt, indem das Polyurethan auf die vorgelegte Textilauflage gegossen wird. Die Textilauflage wird dabei in eine Form eingelegt, mit deren Hilfe beispielsweise ein Flachriemen, Zahnriemen oder Keilriemen ausgeformt wird. Das noch nicht ausreagierte Polyurethan wird flüssig auf die Textilauflage gegossen und verfestigt sich während des Ausreagierens auf der Textilauflage. Diese wird je nach Textildichte während des Gießens ganz oder teilweise von dem Polyurethan durchdrungen.

Insbesondere für Kraftübertragungsriemen ist es jedoch nicht erwünscht, dass das Polyurethan die Textilauflage vollständig durchdringt. Zwar kann auch die von Polyurethan durchdrungene Textilauflage eine Ein- oder Weiterreißneigung unterbinden und für erhöhte Abriebfestigkeit sorgen, bei einem zu großen Polyurethananteil an der Riemenoberfläche erhielte jedoch der hohe Reibungskoeffizient der Riemenpolyurethane einen zu großen, unerwünschten Einfluss.

Erfindungsgemäß ist daher vorgesehen, dass sich im Inneren der Textilauflage zusätzlich zum Textilmaterial ein thermoplastisches Material, nämlich ein Copolyamid, mit einem Schmelzpunkt nicht unter 80 °C befindet und vorzugsweise mit einem Schmelzpunkt im Bereich zwischen 80 und 145 °C, bevorzugt zwischen 90 und 135 °C, weiter bevorzugt zwischen 100 und 135 °C und insbesondere zwischen 100 und 130 °C, welches die Zwischenräume zwischen den Textilfäden oder -fasern in einer Mittelebene des Textils über die Fläche betrachtet im Wesentlichen vollständig ausfüllt. Der Schmelzpunkt des thermoplastischen Materials wird beispielsweise mit der dynamischen Differenzkalorimetrie (DDK), englisch als Differential Scanning Calorimetry (DSC) bezeichnet, bei Umgebungsdruck bestimmt. Das zusätzliche thermoplastische Material, das Copolyamid, befindet sich im Kernbereich des Textils und füllt dort die Hohlräume zwischen den Fasern eines Gewebes, Gewirks, Gestrickts oder eines Vlieses aus und/oder überzieht oder beschichtet die Fasern zumindest teilweise.

Sollten Lücken in dem im Kernbereich bzw. wenigstens einer Mittelebene des Textils befindlichen Copolyamid vorhanden sein, kann dies teilweise toleriert werden, insbesondere, wenn sich Copolyamid in geringerer Konzentration bis in wenigstens einen Randbereich des Textils erstreckt, so dass insgesamt eine gute Sperrwirkung erzielt wird. Das Vorhandensein des thermoplastischen Materials im Kernbereich begrenzt das Eindringen des flüssigen Polyurethans vor dem Vulkanisieren in der Textilauflage und dient als Sperrschicht, so dass das Polyurethan das Textil nicht vollständig durchdringen kann. Die Mittelebene, in der sich das thermoplastische Material in dem Textil befindet, bildet eine Eindringgrenze für das einseitig in die Textilauflage beim Gießen eindringende Polyurethan. Dies bewirkt, dass das Polyurethan der Kraftübertragungszone die Textilauflage, begrenzt durch das thermoplastische Material, nicht vollständig durchdringt.

Die Wirkung des in das Textil eingebrachten zusätzlichen thermoplastischen Materials in Form von Copolyamid besteht einerseits darin, eine Sperrschicht für das Riemenpolyurethan zu bilden, und andererseits die Fasern im Inneren des Textils relativ zu einander zu fixieren, um so einen inneren Abrieb im Textil weitgehend zu verhindern. Dies wirkt sich besonders positiv bei reibungsvermindernden PTFE-haltigen Textilien aus. Diese Textilien werden durch das Copolyamid in ihren Inneren soweit immobilisiert, dass dies auch Einfluss auf die Oberfläche hat und dort einen zusätzlichen Verschleißschutz ausübt. Der Effekt ist umso größer, wenn die Mittelebene, in der sich das Copolyamid befindet, sich näher zur Riemenaußenseite, jedoch noch unterhalb der äußeren Oberfläche der Textilauflage befindet oder wenn, wie bei der zweiten erfindungsgemäßen Alternative, das Copolyamid im Wesentlichen gleichmäßig eingedrungen und in einer durchgehenden Zone zwischen äußerer Textiloberfläche und Mittelebene verteilt ist. Die Verzahnung des die Textilauflage weitgehend durchdringenden Polyurethans mit dem Textil ist durch diese Maßnahme besonders gut.

Unter Copolyamiden werden sowohl Polymere aus mehr als zwei unterschiedlichen Monomertypen, die zu Polyamid polymerisieren, verstanden als auch Mischungen mehrerer solcher Polymere. Die Copolyamide können dabei grundsätzlich aus ein oder mehreren Diaminen in Verbindung mit ein oder mehreren Dicarbonsäuren oder Lactamen, gegebenenfalls in Verbindung mit ein oder mehreren Aminocarbonsäuren, anderen aminosubstituierten Carbonsäuren usw. bestehen. Nur beispielsweise sind zu nennen: Caprolactam/ Hexamethylendiamin/Adipinsäure; Hexamethylendiamin/Adipinsäure/ Sebaccinsäure; Hexamethylendiamin/Tetramethylendiamin/Adipinsäure; Hexamethylendiamin/Tetramethylendiamin/Acelainsäure; sowie Produkte aus Dicarbonsäuren, Diaminen und alpha-Aminocarbonsäuren bzw. Lactamen mit aliphatischen, cycloaliphatischen oder aromatischen Aminen und/oder Carbonsäure, vorzugsweise jeweils mit 6 bis 20 Kohlenstoffatomen je Monomereinheit.

Unter Copolyamiden werden außerdem Mischungen aus mehreren der vorgenannten Copolyamide verstanden.

Weiterhin werden unter Copolyamiden Copolymere aus Polyamideinheiten und weiteren anpolymerisierbaren Einheiten sowie Mischungen aus Copolyamiden, wie oben beschrieben, mit anderen Polymeren verstanden, die jeweils einen Polyamidgehalt von wenigstens 50 Gew.-% aufweisen.

Spezielle Copolyamide, die in Kunstfasertextilien gut einschmelzen und für die Erfindung geeignet sind, sind beispielsweise in DE 32 48 776 A1 und DE 102 12 889 A1 genannt.

Das Copolyamid oder allgemein das thermoplastische Material kann vorzugsweise mit einem reibungsvermindernden Additiv modifiziert sein. Derartige Additive sind dem Fachmann bekannt. Das reibungsvermindernde Additiv kann beispielsweise ausgewählt sein aus der Gruppe Polytetrafluorethylen, Graphit, Silikon, insbesondere in Form von Silikonöl, Molybdänsulfid und Polyvinylchlorid, wobei Mischungen innerhalb der Gruppe eingeschlossen sind.

Das Copolyamid, sollte einen (Gleit-) Reibungskoeffizienten unterhalb von 0,45 und vorzugsweise unterhalb von 0,3 besitzen oder mit Hilfe des vorgenannten reibvermindernden Additivs hierauf eingestellt sein.

Das Copolyamid liegt in der Textilauflage eingeschmolzen vor, bevor das Polyurethan aufgegossen wird. Dies wird vorzugsweise in einem gesonderten Vorbehandlungsschritt durch Aufbringen des thermoplastischen Materials auf eine der Textiloberflächen und anschließendes Einschmelzen von dieser Oberfläche her bewerkstelligt, wobei wenigstens die zum angrenzenden Polyurethan der Kraftübertragungszone gewandte Oberfläche der Textilauflage praktisch frei von dem thermoplastischen Material, dem Copolyamid, ist (bleibt).

Gemäß einer ersten bevorzugten Ausführungsform dringt das thermoplastische Material beim Aufschmelzen, d.h. beim Imprägnieren der Textilauflage zu 50 % bis 100 % seines Gewichts in die Textilstruktur ein, so dass weiter vorzugsweise Copolyamid mit einem Flächengewicht von bis zu 200 g/m2 in der imprägnierten Textilauflage vorhanden ist. Bevorzugte Werte für das Flächengewicht sind 7 bis 200 g/m2 und vorzugsweise 7 bis 150 g/m2.

Gemäß einer weiteren bevorzugten Ausführungsform weist die äußere Oberfläche der Textilauflage, die dem Riemenpolyurethan abgewandt ist, durch das Einsacken des Thermoplasten beim Einschmelzen in ihrer Oberfläche und in ihrem Randbereich einen Anteil an dem thermoplastischen Material auf, der geringer ist, als die Konzentration an zusätzlichem thermoplastischen Material in derjenigen mittleren Ebene, die als Sperrschicht bzw. Fadenfixierungsebene dient. Der geringe Anteil an thermoplastischem Material in der Außenschicht der Textilauflage genügt jedoch für eine zusätzliche Fixierung der Textilfäden und beugt zugleich innerem Abrieb des Textils vor.

Beide Ausführungsformen besitzen den Vorteil, dass das Polyurethan beim Gießen von der thermoplastfreien Seite ungehindert in das Auflagetextil eindringen und so mechanisch mit diesem verzahnen kann.

In einer besonders bevorzugten Ausführungsform ist der Kraftübertragungsriemen nach der Erfindung ein Flachriemen, Keilriemen oder Zahnriemen, besonders bevorzugt ein Zahnriemen.

Das Textil der Textilauflage kann ein Gewebe, ein Gewirk, ein Gestrick oder ein Vlies sein, bevorzugt ist ein Gewebe. Es kann sich dabei um übliche Riementextilien handeln, wie sie dem Fachmann bekannt sind. Bevorzugt sind Textilien aus Kunstfasern oder einem Kunstfasergemisch, wobei die Textilauflage aus diesen Fasern besteht oder sie enthält. Besonders bevorzugte Kunstfasermaterialien bestehen aus Polyamid oder Polyester oder enthalten solche Fasern, beispielsweise Polyamid 6.6, Meta-Aramid, Para-Aramid, Nylon 4.6, wobei eine Ausrüstung mit reibungsvermindernden Materialien, wie Polytetrafluorethylen (PTFE) vorgesehen sein kann. Dabei sind vorzugsweise PTFE-Fäden in das Textil mit eingebunden, wie beispielsweise in der WO 03/031700 A1 gezeigt.

Das erfindungsgemäße Verfahren zur Herstellung eines Kraftübertragungsriemens - insbesondere eines solchen wie vorstehend beschrieben - mit einem Unterbau aus Polyurethan und einer daran ausgebildeten Kraftübertragungszone sowie einer Textilauflage in Kontakt zum Polyurethan der Kraftübertragungszone, bei welchem das Polyurethan in an sich bekannter Weise auf der Textilauflage ausgeformt wird, zeichnet sich dadurch aus,
- dass entweder a) ein in einem Lösungsmittel gelöstes oder suspendiertes thermoplastischen Material auf einer Oberfläche der Textilauflage aufgebracht und in die Textilauflage eindringen gelassen wird, wonach das Lösungsmittel mit oder ohne Einsatz von Wärme abdampfen gelassen bzw. entfernt wird, oder
- b) ein thermoplastisches Material mit einem Schmelzpunkt unterhalb 145 °C in festem Zustand auf eine Oberfläche der Textilauflage aufgebracht wird, wobei das thermoplastische Material durch Wärme zum Schmelzen gebracht wird, sodass es bis zu einer experimentell vorbestimmten Tiefe in die Textilstruktur der Textilauflage eindringt,
- wobei das thermoplastische Material aus a) und b) ein Copolyamid ist,
- und dass das Polyurethan auf die so nach a) oder b) vorbereitete Textilauflage aufgebracht und ausreagieren gelassen wird, wobei es in die angrenzende Oberfläche der Textilauflage eindringt, ohne die Textilauflage vollständig zu durchdringen.

Gleichzeitig werden die Textilfäden oder -filamente durch das eingeschmolzene Copolyamid fixiert.

Das Verfahren sieht demnach grundsätzlich ein mehrstufiges Verfahren vor, wobei zunächst die Textilauflage mit dem Copolyamid imprägniert wird.

Für die Imprägnierung kann das thermoplastische Material (trocken) als Feststoff aufgebracht werden (Pulver oder Folie), oder alternativ kann eine Lösung oder Suspension des thermoplastischen Materials aufgetragen worden sein, beispielsweise mit einem Rakel. Das Lösungsmittel wird mit Wärme ausgetrieben bzw. entfernt, wobei ein suspendiertes Material zusätzlich erweichen oder einschmelzen kann, oder es wird bei Umgebungstemperatur verdampfen gelassen. Die Viskosität der Lösung oder Suspension ist so einzustellen, dass das thermoplastische Material in die Textilauflage eindringt, an wenigstens einer der Textiloberflächen jedoch wenig bis gar nicht vorhanden ist und im Inneren eine gute Barrierewirkung für das später aufzugießende PU bereitstellt.

Gemäß einer bevorzugten Ausführungsform wird eine Folie aus dem thermoplastischen Material, nämlich dem Copolyamid, flächig auf die Textilauflage aufgelegt und unter Wärme eingeschmolzen. Das Eindringen des thermoplastischen Materials geschieht dabei aufgrund der Schwerkraft.

Noch gezielter kann das Material gegebenenfalls eingebracht werden, wenn an der entgegengesetzten Textiloberfläche ein Unterdruck angelegt wird, alternativ kann Druck auf die Folienoberfläche ausgeübt werden.

Das Copolyamid besitzt vorzugsweise einen Schmelzpunkt zwischen 80 und 145 °C, weiter vorzugsweise zwischen 90 und 145 °C, weiter vorzugsweise zwischen 90 und 135 °C, weiter vorzugsweise zwischen 100 und 135 °C und insbesondere zwischen 100 und 130 °C.

Der Vorgang des Einschmelzens bzw. Eindringens wird dabei gemäß einer ersten Ausführungsform der Erfindung so geführt, dass das thermoplastische Material zu wenigstens 50 % seines Gewichts in die Textilstruktur der Textilauflage eindringt und dort anschließend vorzugsweise mit einem Flächengewicht von bis zu 200 g/m2 in der Textilauflage vorliegt.

Gemäß einer weiteren Ausführungsform wird der Vorgang des Einschmelzens bzw. Eindringens vorzugsweise so geführt, dass sich anschließend die höchste Konzentration des Copolyamids als thermoplastischem Material in einer Mittelebene der Textilauflage befindet. Diese Mittelebene kann sich in Bezug auf die Textilauflagendicke in der Mitte befinden oder in einem Kernbereich befinden oder in einer zu einer Oberfläche näher gelegenen Ebene befinden, jedoch nicht an der Oberfläche des Textils selbst. Aufgrund des Einschmelzvorgangs kann sich an einer Oberfläche des Textils eine Konzentration an thermoplastischem Material befinden, die jedoch geringer ist als Kernbereich bzw. der durch die Verfahrensführung bestimmte Mittelebene.

Nachdem das Textil in dieser Weise imprägniert wurde, kann es in eine Form eingelegt werden. In einem weiteren Verfahrensschritt wird das Polyurethan für die Kraftübertragungszone des Riemenunterbaus auf die so vorbereitete bzw. imprägnierte Textilauflage aufgebracht und ausreagieren gelassen. Hierfür dringt es in die angrenzende Oberfläche der Textilauflage ein, ohne diese Auflage vollständig zu durchdringen. Hierdurch erfolgt eine ausreichende mechanische Verzahnung zwischen Polyurethan und Textilauflage, ohne dass stark reibungserhöhendes Polyurethan an die Oberfläche des Riemens gelangte, da die Sperrwirkung der Imprägnierung im Inneren der Textilauflage dies verhindert.

Vorzugsweise wird das Polyurethan von der nicht imprägnierten Seite des Textils aufgebracht.

Weiterhin ist es für bestimmte Ausführungsformen bevorzugt, dass Fäden oder Filamente des Textils der Textilauflage reibungsvermindernd ausgerüstet sind, beispielsweise mit PTFE-Fasern, wie oben bereits beschrieben.

Erfindungsgemäß dringt das thermoplastische Material nämlich das Copolyamid, tief in das Textil ein und fixiert dabei die Textilfasern der abriebfesten Textilauflage. Es ist vorteilhaft, jedoch nicht zwingend, dass das Copolyamid eine gute chemische Adhäsion bzw. Affinität zu den oder Teilen der Textilfasern besitzt. Dies ist z.B. der Fall, wenn als ein erfindungsgemäß relativ niedrig schmelzendes, faserfixierendes CopolyamidThermoplastmaterial auf einem Riementextil aus Polyamid oder Polyester oder mit einem hohen Anteil an Polyamid- und/oder Polyesterfasern eingesetzt wird. Ein entscheidender Vorteil der Erfindung ist, dass die spröden reibungsvermindernden Textilfasern, wie beispielsweise PTFE-Fasern, nicht durch Bruch und innere Reibung in einem "trockenen" (nicht imprägnierten) Textil verloren gehen können, sondern durch die Imprägnierung in dem Textil gehalten werden, bis sie ihren maximal möglichen Beitrag zur Reibungsverminderung, d.h. bis zu ihrem vollständigen Abgetragensein durch Abrieb geleistet haben. Hierdurch werden beträchtliche Laufzeitverbesserungen erzielt.

Die Erfindung umfasst weiterhin ein Riementextil, insbesondere ein Zahnriementextil, für die Verwendung als Textilauflage in einem erfindungsgemäßen Kraftübertragungsriemen.

Das erfindungsgemäße Riementextil ist ein Kunstfasertextil, welches gegebenenfalls Beimischungen anderer Fasern zum Beispiel von Naturfasern wie Baumwollfasern enthält vorzugsweise ist die Summe der Beimischungen maximal 40 Vol.-%. Dieses erfindungsgemäße Riementextil enthält zusätzlich zu dem Material der Textilfäden und -fasern in den Zwischenräumen zwischen den Textilfäden oder -fasern und/oder als Beschichtung auf den Textilfäden oder -fasern - jedoch nicht als Beschichtung der gesamten Textilfäden - ein thermoplastisches Material, welches (a) entweder an ein oder beiden Textiloberflächen praktisch nicht vorhanden ist, während seine Konzentration in einer Mittelebene zwischen den Oberflächen des Textils am größten ist, oder welches (b) an und auf einer Oberfläche des Textils vorhanden und zu wenigstens 50 Gew.-% in die Textilauflage eingedrungen ist, wobei das thermoplastische Material ein Copolyamid ist.

Das Riementextil soll dabei das thermoplastische Material vorzugsweise mit einem Flächengewicht von bis zu 200 g/m2 in der Textilstruktur enthalten, wie oben bereits beschrieben.

Dieses erfindungsgemäße Riementextil kann beispielsweise durch Einschmelzen eines pulverförmig auf eine Oberfläche aufgebrachten thermoplastischen Materials oder einer auf eine Oberfläche aufgelegten Folie aus dem thermoplastischen Material in das Textil eingeschmolzen worden sein, jeweils vorzugsweise unter Druck. Alternativ kann eine Lösung oder Suspension des thermoplastischen Materials aufgetragen worden sein, beispielsweise mit einem Rakel. Das Lösungsmittel wird mit Wärme ausgetrieben bzw. entfernt, wobei ein suspendiertes Material zusätzlich erweichen oder einschmelzen kann, oder es wird verdampfen gelassen. Das thermoplastische Material befindet sich dann vorzugsweise im Kernbereich des Textils, und beide Oberflächenbereiche weisen deutlich geringere Konzentrationen an dem zusätzlichen thermoplastischen Material auf, als der Kernbereich. Die höchste Konzentration des thermoplastischen Materials befindet sich dann in einer Mittelebene zwischen den Oberflächen, die im Wesentlichen parallel zwischen den Oberflächen angeordnet ist. Diese Mittelebene kann sich bezüglich der Textildicke genau in der Mitte des Textilmaterials befinden, kann jedoch auch näher zu einer der Oberflächen angeordnet sein.

Vorzugsweise ist die Konzentration des zusätzlichen thermoplastischen Materials in einer Mittelebene oder im gesamten Kernbereich deutlich höher als zu einer der Oberflächen, wobei die andere Oberfläche völlig frei von dem zusätzlichen thermoplastischen Material ist.

In einem bevorzugten Ausführungsbeispiel kann diese freie Oberfläche später die Grenzschicht zum Riemenpolyurethan bilden, das von dieser Seite ungehindert in das Textil eindringen und mit diesem mechanisch beim Aushärten verzahnen kann. Die anderer Textiloberfläche, die bei Verwendung als Textilauflage eines Riemens außen liegt, enthält nur wenig des zusätzlichen thermoplastischen Materials, das jedoch ausreicht, auch die äußeren Fasern der Textilauflage zu fixieren und vor innerem Abrieb zu schützen.

Das thermoplastische Material, das zusätzlich in das Riementextil eingebracht wurde, ist ein Copolyamid, das zusätzlich reibungsvermindernd modifiziert sein kann, wie oben bereits näher beschrieben. Weiterhin ist es bevorzugt, dass die Textilfasern oder -fäden reibungsvermindernd ausgerüstet sind. In besonders bevorzugter Ausführungsform enthält das Textil Polytetrafluorethylenfasern, vorzugsweise zusätzlich zu einem'höheren Gehalt anderer Kunstfasern. Besonders bevorzugt enthält das Riementextil einen hohen Anteil an Polyamid im Basisgewebe, beispielsweise größer 40 Gew.-%.

Im Folgenden wird die Erfindung anhand eines in der Zeichnung dargestellten Ausführungsbeispiels näher beschrieben.

In der Zeichnung zeigen:
- Figur 1: - eine Textilauflage mit aufgelegter Folie aus thermoplastischem Material (Copolyamid);
- Figur 2: - die Textilauflage aus Figur 1 mit eingeschmolzenem thermoplastischen Material (Copolyamid);
- Figur 3: - die Textilauflage aus Figur 2, gewendet, mit aufgegossenem Polyurethan;
- Figuren 4a) und b): - die Konzentrationsverhältnisse an thermoplastischem Material (TP) und Polyurethan (PU), aufgetragen über die Höhe (h) des Riementextils für 2 Beispiele;
- Figuren 5a) - 5c): - schematische Darstellung von Standardriemen, an denen die Erfindung verwirklicht sein kann, a) Keilriemen; b) Zahnriemen; c) Bandriemen.

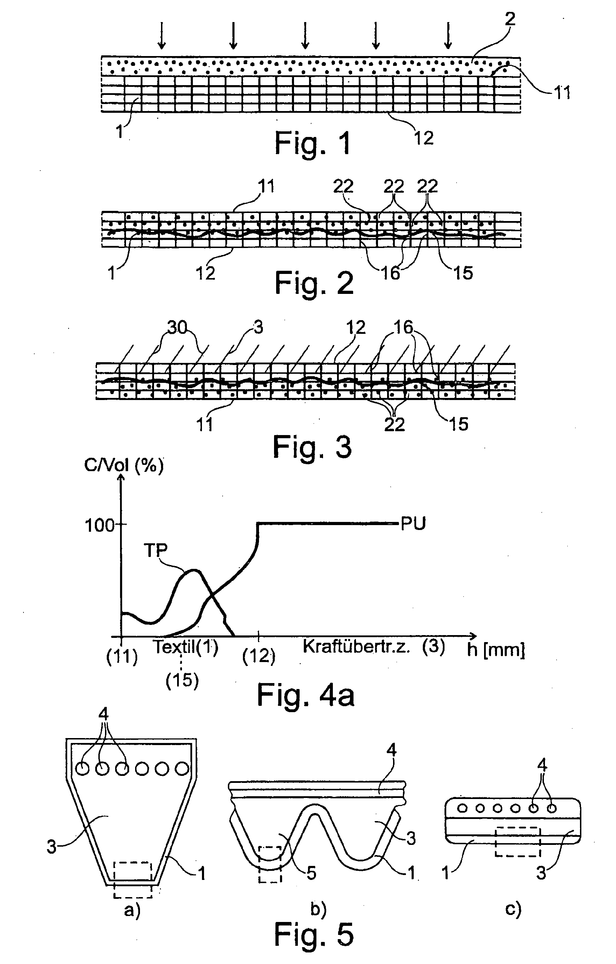

Figur 1 zeigt eine Prinzipskizze eines Querschnitts durch eine Textilauflage 1, die für die Imprägnierung mit einem Copolyamid vorbereitet wird. Hierfür liegt eine Folie 2 aus Copolyamid flächig auf der äußeren Oberfläche 11 der Textilauflage 1 auf. Die trockene Textilauflage 1 mit der aufliegenden thermoplastischen Folie 2, einer Copolyamidfolie, wie sie als Schmelzkleberfolie für die Textilindustrie verwendet wird, wird insgesamt erwärmt. Die Wärmezufuhr kann mit einem geheizten Förderband, in einem Durchlaufofen oder mit einem beheizbaren Kalander erfolgen. Die Temperatur wird am Ort des Textils auf ca. 100 bis 160 °C geregelt. Wie durch die Pfeile angedeutet, schmilzt das Material der Folie 2 unter der eigenen Schwerkraft oder vermittelt durch Druck (hier nicht dargestellt) in die Textilauflage 1 ein.

Figur 2 zeigt den Zustand der imprägnierten Textilauflage 1 nach Abschluss des Einschmelzens der Folie 2. Die Textilauflage 1 behält im ausgekühlten Zustand diese Struktur bei und kann nun weiterverarbeitet werden. Wie zu erkennen, ist das thermoplastische Material 22 unter Auflösung der Folie vollständig in das Textil eingedrungen, so dass an der äußeren Oberfläche 11 der Textilauflage nur noch eine geringe Konzentration des thermoplastischen Materials 22 vorhanden ist. Vielmehr ist das Material 22 bis auf eine Mittelebene 15 in der Textilauflage 1 durchgesackt, fixiert dort die hier nur angedeuteten Fäden bzw. Fasern 16 des Textils über die gesamte Mittelebene 15 und bildet gleichzeitig eine Sperrschicht, indem es die ansonsten vorhandenen Poren innerhalb der Ebene 15 des Textils verschließt. In dem Bereich zwischen Mittelebene 15 und äußerer Oberfläche 11 der Textilauflage findet eine zusätzliche Faserfixierung durch eine relativ geringere Konzentration des thermoplastischen Materials 22 statt.

Figur 3 zeigt eine weitere Querschnittsskizze zu einem nachfolgenden Bearbeitungsschritt, nachdem das für die Kraftübertragungszone bzw. den Riemenunterbau vorgesehene Polyurethan auf die Textilauflage 1 aufgebracht wurde. Hierfür wurde die mit dem thermoplastischen Material 22 imprägnierte Textilauflage 1 zunächst gewendet, so dass die äußere Oberfläche 11 nach unten in eine hier nicht dargestellte Form eingelegt wird und die innere Oberfläche 12 zwischen Riemenpolyurethan und Textilauflage oben liegt. Das Riemenpolyurethan 30 der Kraftübertragungszone 3 dringt nun wie üblich zwischen die Fäden 16 des Riementextils der Textilauflage 1 ein, und zwar bis zur Mittelebene 15 und der dort durch das thermoplastische Material 22 gebildeten Sperrschicht. Sollten sich beispielsweise durch unterschiedlich tiefes Einsinken beim Imprägniervorgang Lücken in der Sperrschicht ergeben, verzahnt sich das Riemenpolyurethan 30 zusätzlich durch die Mittelebene 15 hindurch mit darunter liegenden Gewebefäden im Imprägnierungsbereich, jedoch keinesfalls soweit durchdringend wie bei einer entsprechenden nicht imprägnierten Textilauflage 1.

An der Querschnittsansicht in Figur 3 ist zu erkennen, dass einerseits die gewünschte gute mechanische Verzahnung zwischen Riemenpolyurethan 30 und Textilauflage 1 erfolgen kann, ohne dass zuviel Riemenpolyurethan 30 in die Nähe der späteren äußeren Oberfläche 11 gelangt und dort bei längeren Laufzeiten durch Abrieb des Textils den Reibungskoeffizienten an der sich laufend abtragenden Oberfläche 11 erhöht. Gleichzeitig werden die Fasern, Fäden oder Filamente - je nach Textilart - durch das thermoplastische Material 22 in Form des Copolyamids fixiert, was ein Scheuern der Fäden und Fasern 16 untereinander verringert, wodurch insbesondere die relativ steifen Polytetrafluorethylenfäden, sofern vorhanden, weniger leicht brechen können.

Figur 4a) zeigt beispielhaft den ungefähren Konzentrationsverlauf von Polyurethan und thermoplastischem Material über die Höhe, d.h. die Dicke der Textilauflage für das in Figuren 1 bis 3 gezeigte Beispiel. Innerhalb der Kraftübertragungszone 3 beträgt der Polyurethananteil 100 Vol.-%. In dem Bereich, in dem das Polyurethan an der zur Kraftübertragungszone 3 gewandten inneren Oberfläche 12 der Textilauflage in diese eindringt, verringert sich der Polyurethananteil sprunghaft zu Gunsten des Textilmaterials und nimmt bis zur Mittelebene 15 immer mehr ab. Im Bereich der Mittelebene 15 der Textilauflage 1 verringert sich die Polyurethankonzentration wiederum sprunghaft in Richtung auf die außen liegende Oberfläche 11 der Textilauflage, an der selbst kein Polyurethan mehr vorhanden ist. Die Konzentration des thermoplastischen Polymers (TP), des Copolyamids, ist an der äußeren Oberfläche 11, über welche imprägniert wurde, etwas größer als im darunterliegenden Bereich und besitzt ein Konzentrationsmaximum im Kernbereich der Textilauflage bzw. um die Mittelebene 15 herum. Dies bewirkt die Sperrwirkung gegenüber dem Polyurethan.

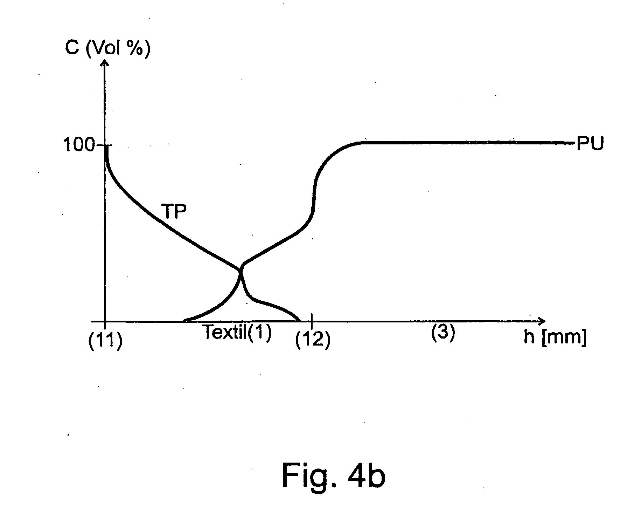

Figur 4b) zeigt den ungefähren Konzentrationsverlauf - aufgetragen wie bei Figur 4a) - wenn die Thermoplastfolie (2) weniger stark erwärmt und unter leichtem Druck zu mehr als 50 %, jedoch noch nicht 100 %, in das Textil der Auflage eingebracht wurde. Der Gehalt an thermoplastischem Material (TP) ist daher an der äußeren Oberfläche (11) groß und verringert sich schnell deutlich bis zu Eintragsgrenze. Das Polyurethan (PU) dringt von der innenliegenden Oberfläche (12) des Textils zunächst relativ ungehindert weit ein. Sperrwirkung und zusätzliche Verzahnung im imprägnierten Textil finden erst nahe zur äußeren Oberfläche (11) statt.

Figuren 5a) bis 5c) zeigen die Anwendung der Erfindung bei Standardriemen. Die Textilauflage (1) deckt jeweils die Kraftübertragungszonen 3 der Riemenunterbauten ab. Gezeigt ist außerdem die riementypische Anordnung von Festigkeitsträgern 4. Figur 5a) zeigt einen Keilriemen mit vollständiger Textilummantelung. Die Textilauflage 1 umschließt den Riemen vollständig. Figur 5b) zeigt einen Zahnriemen mit in Querrichtung angeordneten Zähnen 5 und längsverlaufenden Festigkeitsträgern 4. Hier deckt die Textilauflage (1) die gesamten Zahnflächen mit Tälern, Spritzen und Flanken ab. Figur 5c) zeigt einen Flachriemen, dessen Textilauflage (1) auf die Innenfläche begrenzt ist. Figuren 1 bis 3 zeigen Ausschnittsbereiche, die den gestrichelten in Figuren 5 entsprechen.

In der Praxis bewirkt die Faserfixierung eine wesentliche Erhöhung der Laufzeiten des Riemens. Die Eigenschaften des Riemens bleiben daher lange Zeit unverändert.

### Beispiel/Test

Getestet wurde ein Zahnriemen. Das verwendete Textil der Zahnabdeckung war ein Gewebe mit PA 6.6 in Kette und Schuss; Gewicht 275 g/m2; 2x2 Twillbindung, Textil-Dehnfähigkeit: 80 % bei 20 Newton Belastung, Breite des Probestücks 25 mm.

Auf dieses Textilgewebe wurde zunächst eine Folie aus einem Copolyamid der Stärke 50 µm aufgelegt. Der Schmelzbereich dieses Copolyamids ist vom Hersteller mit 110 bis 120 °C angegeben. Die Folie wurde bei etwas oberhalb der Schmelztemperatur unter Druck in einem heizbaren Kalander auf das Textil aufgeschmolzen. Wärme und Druck wurden so eingestellt, dass das Textil das geschmolzene Material gerade aufnahm.

Nach dem Abkühlen des so imprägnierten Textils wurde es gewendet, in eine Riemenform verbracht, und es wurde ein Polyurethan aufgegossen.

Die Laufzeit des so erhaltenen Zahnriemens erhöhte sich gegenüber einem vergleichbaren Riemen ohne Imprägnierung um den Faktor 2 bis 3.

## Patentansprüche

1. Kraftübertragungsriemen mit einem Unterbau und einer Kraftübertragungszone (3) aus Polyurethan (PU; 30) sowie einer Textilauflage (1) in Kontakt zum Polyurethan der Kraftübertragungszone (3), wobei sich im Inneren der Textilauflage (1) zusätzlich zum Textilmaterial ein thermoplastisches Material befindet und sich das Polyurethan (30) der Kraftübertragungszone (3) bis in die Textilauflage (1) hinein erstreckt, durch das thermoplastische Material begrenzt ist und die Textilauflage (1) nicht vollständig durchdringt, **dadurch gekennzeichnet, dass** das thermoplastische Material (22) ein Copolyamid mit einem Schmelzpunkt zwischen 80°C und 145°C ist, welches die Zwischenräume zwischen den Textilfäden (16) oder -fasern in einer Mittelebene (15) des Textils über die Fläche betrachtet im Wesentlichen vollständig ausfüllt.

2. Kraftübertragungsriemen nach Anspruch 1, **dadurch gekennzeichnet, dass** das thermoplastische Material (22) in die Textilauflage (1) eingeschmolzen vorliegt, wobei wenigstens die zum angrenzenden Polyurethan (30) der Kraftübertragungszone (3) gewandte Oberfläche (12) der Textilauflage (1) praktisch frei von dem thermoplastischen Material (22) ist.

3. Kraftübertragungsriemen nach einem der Ansprüche 1 oder 2, **dadurch gekennzeichnet, dass** der Riemen ein Flachriemen, Keilriemen oder Zahnriemen ist.

4. Kraftübertragungsriemen nach einem der Ansprüche 1 bis 3, **dadurch gekennzeichnet, dass** das Textil der Textilauflage (1) ein Gewebe ist.

5. Kraftübertragungsriemen nach einem der Ansprüche 1 bis 4, **dadurch gekennzeichnet, dass** die Textilauflage (1) aus Kunstfasern oder einem Kunstfasergemisch besteht oder diese enthält.

6. Verfahren zur Herstellung eines Kraftübertragungsriemens mit einem Unterbau aus Polyurethan (30) und einer daran ausgebildeten Kräftübertragungszone (3) sowie einer Textilauflage (1) in Kontakt zum Polyurethan (30) der Kraftübertragungszone (3), bei welchem das Polyurethan (30) auf der Textilauflage (1) ausgeformt wird, wobei es in die angrenzende Oberfläche (12) der Textilauflage eindringt, ohne die Textilauflage (1) vollständig zu durchdringen, **dadurch gekennzeichnet, dass** entweder a) ein in einem Lösungsmittel gelöstes oder suspendiertes thermoplastischen Material (22) auf einer Oberfläche (11, 12) der Textilauflage (1) aufgebracht und in die Textilauflage (1) eindringen gelassen wird, wonach das Lösungsmittel mit oder ohne Einsatz von Wärme abdampfen gelassen bzw. entfernt wird, oder b) ein thermoplastisches Material (22) mit einem Schmelzpunkt unterhalb 145 °C in festem Zustand auf eine Oberfläche (11, 12) der Textilauflage (1) aufgebracht wird, wobei das thermoplastische Material (22) durch Wärme zum Schmelzen gebracht wird, sodass es bis zu einer experimentell vorbestimmten Tiefe in die Textilstruktur der Textilauflage (1) eindringt, und dass das Polyurethan (30) auf die so nach a) oder b) vorbereitete Textilauflage (1) aufgebracht und ausreagieren gelassen wird, wobei das thermoplastische Material (22) ein Copolyamid ist.

7. Verfahren nach Anspruch 6, **dadurch gekennzeichnet, dass** eine Folie (2) aus dem thermoplastischen Material (22) auf die Textilauflage (1) flächig aufgelegt und unter Wärme und weiter vorzugsweise unter Druck eingeschmolzen wird.

8. Verfahren nach Anspruch 6 oder 7, **dadurch gekennzeichnet, dass** das Copolyamid einen Schmelzpunkt zwischen 80 bis 145 °C, vorzugsweise zwischen 90 °C und 135 °C, weiter vorzugsweise zwischen 100 °C und 135 °C, besonders bevorzugt zwischen 100 °C und 130 °C besitzt.

9. Verfahren nach einem der Ansprüche 6 bis 8, **dadurch gekennzeichnet, dass** das thermoplastische Material (22) zu wenigstens 50 % seines Gewichts in die Textilstruktur der Textilauflage (1) eindringt, um vorzugsweise mit einem Flächengewicht von bis zu 200 g/m² in der Textilauflage (1) vorhanden zu sein.

10. Verfahren nach einem der Ansprüche 6 bis 9, **dadurch gekennzeichnet, dass** das Einschmelzen derart durchgeführt wird, dass sich die höchste Konzentration des thermoplastischen Materials (22) in einer Mittelebene (15) der Textilauflage (1) einstellt.

11. Verfahren nach einem der Ansprüche 6 bis 10, **dadurch gekennzeichnet, dass** die Fäden (16) oder Filamente des Textils der Textilauflage (1) reibungsvermindernd ausgerüstet sind.

12. Riementextil für die Verwendung als Textilauflage (1) in einem Kraftübertragungsriemen nach einem der Ansprüche 1 bis 5, **dadurch gekennzeichnet, dass** das Textil ein Kunstfasertextil ist, gegebenenfalls mit Beimischung anderer Fasern, und dass es zusätzlich zu dem Material der Textilfasern in den Zwischenräumen zwischen den Textilfäden (16) oder - fasern und/oder als Beschichtung auf den Textilfäden (16) oder -fasern ein thermoplastisches Material (22) enthält, welches (a) an ein oder beiden Textiloberflächen (11, 12) praktisch nicht vorhanden ist, während seine Konzentration in einer Mittelebene (15) zwischen den Oberflächen (11, 12) des Textils am größten ist, oder welches (b) an und auf einer Oberfläche (11, 12) des Textils vorhanden und zu wenigstens 50 Gew.-% in die Textilauflage (1) eingedrungen ist, wobei das thermoplastische Material (22) ein Copolyamid ist.

13. Riementextil nach Anspruch 12, **dadurch gekennzeichnet, dass** das Copolyamid einen Schmelzpunkt zwischen 80 bis 145 °C, vorzugsweise zwischen 90 °C und 135 °C, weiter vorzugsweise zwischen 100 °C und 135 °C, besonders bevorzugt zwischen 100 °C und 130 °C besitzt.

14. Riementextil nach Anspruch 12 oder 13, **dadurch gekennzeichnet, dass** die Textilfasern oder -fäden (16) reibvermindernd ausgerüstet sind.

15. Riementextil nach einem der Ansprüche 12 bis 14, **dadurch gekennzeichnet, dass** das Textil PTFE-Fasern enthält.

## Claims

1. Power transmission belt having a bottom section and a power transmission zone (3) of polyurethane (PU; 30) and also a textile overlay (1) in contact with the polyurethane of the power transmission zone (3), wherein the interior of the textile overlay (1) includes additionally to the textile material a thermoplastic material and the polyurethane (30) of the power transmission zone (3) extends into the textile overlay (1), is bounded by the thermoplastic material and does not completely penetrate the textile overlay (1), **characterized in that** the thermoplastic material (22) is a copolyamide with a melting point between 80°C and 145°C which substantially completely fills the interstices between the textile threads (16) or fibers in a central plane (15) of the textile when viewed across the area.

2. Power transmission belt according to Claim 1, **characterized in that** the thermoplastic material (22) has been melted into the textile overlay (1) such that at least the textile overlay (1) surface (12) facing the adjacent polyurethane (30) of the power transmission zone (3) is virtually free from the thermoplastic material (22).

3. Power transmission belt according to either of Claims 1 and 2, **characterized in that** the belt is a flat belt, a V-belt or a toothed belt.

4. Power transmission belt according to any of Claims 1 to 3, **characterized in that** the textile of the textile overlay (1) is a woven fabric.

5. Power transmission belt according to any of Claims 1 to 4, **characterized in that** the textile overlay (1) consists of or contains manufactured fibers or a manufactured-fiber blend.

6. Process for producing a power transmission belt having a bottom section of polyurethane (30) and a power transmission zone (3) constructed thereon and also a textile overlay (1) in contact with the polyurethane (30) of the power transmission zone (3), which comprises forming the polyurethane (30) on the textile overlay (1), wherein it penetrates into the adjacent surface (12) of the textile overlay without completely penetrating the textile overlay (1), **characterized in that** either a) a thermoplastic material (22) dissolved or suspended in a solvent is applied to a surface (11, 12) of the textile overlay (1) and allowed to penetrate into the textile overlay (1), whereafter the solvent is evaporated/removed with or without employment of heat, or b) a thermoplastic material (22) having a melting point below 145°C is applied in the solid state to a surface (11, 12) of the textile overlay (1), wherein the thermoplastic material (22) is made to melt by means of heat, such that it penetrates down to an experimentally predetermined depth into the textile structure of the textile overlay (1), and **in that** the polyurethane (30) is applied to the textile overlay (1) thus pretreated according to a) or b) and allowed to react, wherein the thermoplastic material (22) is a copolyamide.

7. Process according to Claim 6, **characterized in that** a foil (2) of the thermoplastic material (22) is placed flat onto the textile overlay (1) and melted thereinto under heat and further preferably under pressure.

8. Process according to Claim 6 or 7, **characterized in that** the copolyamide has a melting point between 80 to 145°C, preferably between 90°C and 135°C, more preferably between 100°C and 135°C and yet more preferably between 100°C and 130°C.

9. Process according to any of Claims 6 to 8, **characterized in that** the thermoplastic material (22) penetrates at least 50% of its weight into the textile structure of the textile overlay (1), preferably in order to be present in the textile overlay (1) at a basis weight of up to 200 g/m².

10. Process according to any of Claims 6 to 9, **characterized in that** the melting is performed such that the highest concentration of the thermoplastic material (22) becomes established in a central plane (15) of the textile overlay (1).

11. Process according to any of Claims 6 to 10, **characterized in that** the threads (16) or filaments of the textile of the textile overlay (1) have been rendered friction reducing.

12. Belt textile for use as textile overlay (1) in a power transmission belt according to any of Claims 1 to 5, **characterized in that** the textile is a manufactured-fiber textile, optionally with admixture of other fibers, and **in that** in addition to the material of the textile fibers it contains in the interstices between the textile threads (16) or fibers and/or as coating on the textile threads (16) or fibers a thermoplastic material (22) which (a) is virtually not present on either or both of the textile surfaces (11, 12) while its concentration is at its highest in a central plane (15) between the surfaces (11, 12) of the textile, or which (b) is present at and on a surface (11, 12) of the textile and is at least 50 wt% penetrated into the textile overlay (1), wherein the thermoplastic material (22) is a copolyamide.

13. Belt textile according to Claim 12, **characterized in that** the copolyamide has a melting point between 80 to 145°C, preferably between 90°C and 135°C, more preferably between 100°C and 135°C and yet more preferably between 100°C and 130°C.

14. Belt textile according to Claim 12 or 13, **characterized in that** the textile fibers or threads (16) have been rendered friction reducing.

15. Belt textile according to any of Claims 12 to 14, **characterized in that** the textile contains PTFE fibers.

## Revendications

1. Courroie de transmission de force avec une carcasse et une zone de transmission de force (3) en polyuréthane (PU; 30) ainsi qu'avec un support textile (1) en contact avec le polyuréthane de la zone de transmission de force (3), dans laquelle il se trouve à l'intérieur du support textile (1) un matériau thermoplastique en plus du matériau textile et le polyuréthane (30) de la zone de transmission de force (3) s'étend jusque dans le support textile (1), est limité par le matériau thermoplastique et ne traverse pas complètement le support textile (1), **caractérisée en ce que** le matériau thermoplastique (22) est un copolyamide ayant un point de fusion compris entre 80°C et 145°C, qui remplit de façon essentiellement totale, considéré sur la surface, les espaces intermédiaires entre les fils (16) ou les fibres textiles dans un plan médian (15) du textile.

2. Courroie de transmission de force selon la revendication 1, **caractérisée en ce que** le matériau thermoplastique (22) est présent sous forme fondue dans le support textile (1), dans laquelle au moins la surface (12) du support textile (1) tournée vers le polyuréthane adjacent (30) de la zone de transmission de force (3) est pratiquement exempt du matériau thermoplastique (22).

3. Courroie de transmission de force selon une des revendications 1 ou 2, **caractérisée en ce que** la courroie est une courroie plate, une courroie trapézoïdale ou une courroie dentée.

4. Courroie de transmission de force selon l'une quelconque des revendications 1 à 3, **caractérisée en ce que** le textile du support textile (1) est un tissu.

5. Courroie de transmission de force selon l'une quelconque des revendications 1 à 4, **caractérisée en ce que** le support textile (1) se compose de fibres synthétiques ou d'un mélange de fibres synthétiques ou contient celles-ci.

6. Procédé de fabrication d'une courroie de transmission de force avec une carcasse en polyuréthane (30) et une zone de transmission de force (3) formée sur celle-ci ainsi qu'avec un support textile (1) en contact avec le polyuréthane (30) de la zone de transmission de force (3), dans lequel le polyuréthane (30) est mis en forme sur le support textile (1), dans lequel il pénètre dans la surface adjacente (12) du support textile sans traverser complètement le support textile (1), **caractérisé en ce que** soit a) on dépose un matériau thermoplastique (22) en solution ou en suspension dans un solvant sur une surface (11, 12) du support textile (1) et on le fait pénétrer dans le support textile (1), et on fait ensuite évaporer ou on élimine le solvant avec ou sans apport de chaleur, soit b) on dépose un matériau thermoplastique (22) présentant un point de fusion inférieur à 145°C à l'état solide sur une surface (11, 12) du support textile (1), le matériau thermoplastique (22) étant amené à fondre par application de chaleur, de telle manière qu'il pénètre dans la structure textile du support textile (1) jusqu'à une profondeur prédéterminée expérimentalement, et **en ce que** l'on dépose et on fait réagir le polyuréthane (30) sur le support textile (1) ainsi préparé selon a) ou b), le matériau thermoplastique (22) étant un copolyamide.

7. Procédé selon la revendication 6, **caractérisé en ce que** l'on dépose à plat un film (2) du matériau thermoplastique (22) sur le support textile (1) et on le fait fondre sous la chaleur et en plus de préférence sous pression.

8. Procédé selon la revendication 6 ou 7, **caractérisé en ce que** le copolyamide présente un point de fusion compris entre 80 et 145°C, de préférence entre 90°C et 135°C, de préférence encore entre 100°C et 135°C, et de préférence particulière entre 100°C et 130°C.

9. Procédé selon l'une quelconque des revendications 6 à 8, **caractérisé en ce que** le matériau thermoplastique (22) pénètre à raison d'au moins 50 % de son poids dans la structure textile du support textile (1), pour être présent dans le support textile (1) de préférence avec un poids par unité de surface pouvant atteindre 200 g/m2.

10. Procédé selon l'une quelconque des revendications 6 à 9, **caractérisé en ce que** l'on effectue la fusion de telle manière que la concentration la plus élevée du matériau thermoplastique (22) s'établisse dans un plan médian (15) du support textile (1).

11. Procédé selon l'une quelconque des revendications 6 à 10, **caractérisé en ce que** les fils (16) ou les filaments du textile du support textile (1) sont équipés de façon à réduire le frottement.

12. Textile pour courroie à utiliser comme support textile (1) dans une courroie de transmission de force selon l'une quelconque des revendications 1 à 5, **caractérisé en ce que** le textile est un textile en fibres synthétiques, éventuellement avec ajout d'autres fibres, et **en ce qu'**il contient, en plus du matériau des fibres textiles, dans les espaces intermédiaires entre les fils (16) ou les fibres textiles et/ou comme revêtement sur les fils (16) ou les fibres textiles, un matériau thermoplastique (22), qui (a) n'est pratiquement pas présent sur une ou sur les deux surface(s) textile(s) (11, 12), tandis que sa concentration est la plus élevée dans un plan médian (15) entre les surfaces (11, 12) du textile, ou qui (b) est présent à et sur une surface (11, 12) du textile et a pénétré à raison d'au moins 50 % en poids dans le support textile (1), le matériau thermoplastique (22) étant un copolyamide.

13. Textile pour courroie selon la revendication 12, **caractérisé en ce que** le copolyamide présente un point de fusion compris entre 80 et 145°C, de préférence entre 90°C et 135°C, de préférence encore entre 100°C et 135°C, et de préférence particulière entre 100°C et 130°C.

14. Textile pour courroie selon la revendication 12 ou 13, **caractérisé en ce que** les fibres ou les fils textiles (16) sont équipés de façon à réduire le frottement.

15. Textile pour courroie selon l'une quelconque des revendications 12 à 14, **caractérisé en ce que** le textile contient des fibres de PTFE.
